# EUROPEAN PATENT APPLICATION

(11) **EP 0 730 373 A2**
(43) Date of publication of application: **04.09.1996**
(21) Application number: 96102863.6
(22) Date of filing: 27.02.1996
(51) Int. Cl.: H04N 5/44

(54) **Electronic domestic apparatus with a reproduction device of audio signals and a control unit that can be utilised for storing and reproducing sonorous messages**

(30) Priority: 02.03.1995 IT TO950149
(71) Applicant: SELECO S.p.A., I-33170 Pordenone (IT)
(72) Inventor: Raccanelli, Massimo, 31029 Vittorio Veneto (TV) (IT)
(74) Representative: Dini, Roberto, Dr. Ing.

(57) **Abstract**

Electronic domestic apparatus is described, in particular a television signals receiver, which can be connected to a source of audio signals and to a reproducer of acoustic signals, and equipped with a control keyboard (10); the main characteristic of the described apparatus consists in that it provides means able to receive, record in an electronic memory (24) and reproduce a sonorous message and a circuitry switching block (16) for selectively connecting such reproducer of acoustic signals to the two different sources of audio signals.

## Description

The present invention relates to an electronic domestic apparatus, in particular a television signals receiver, that can be connected to a source of audio signals and a reproducer of acoustic signals, and equipped with a control key pad.

It is known that in these days the majority of houses are equipped with at least one electronic apparatus with a control key pad; for instance a television, a radio receiver, a video cassette recorder, a hi-fi apparatus, normally equipped with a remote control device.

It has been proposed for instance to use a television set for leaving messages, that are written by way of the remote control in the electronic memory of the television and can then be called to the screen by the user.

Moreover the "writing" of the message very often results in being slow and difficult, inasmuch usually, for obvious reasons of simplicity, the operation is carried out by two keys that recall in a sequential manner, backwards and forward, the various alphanumeric characters. The message moreover has to be short, otherwise such prohibitive times will be lengthened.

The aim of the present invention is that of indicating how it is possible to produce apparatuses of the type described which facilitate the user in the aforementioned conditions, reducing the drawbacks to a minimum. For reaching such aims the present invention has as its subject an electronic domestic apparatus, in particular a television signals receiver, which can be connected to a source of audio signals and to a reproducer of acoustic signals, and equipped with a control keyboard, characterised in that it provides means able to receive, record in an electronic memory and reproduce a sonorous message and a circuitry switching block for selectively connecting such reproducer of acoustic signals to the two different sources of audio signals.

Further characteristics and advantages of the present invention shall result in being clear from the following description and annexed drawings, supplied purely and an explanatory and non-limiting example, wherein:
- figure 1 represents the block diagram of a part of the circuit of a television signals receiver according to the invention;
- figure 2 represents in detail the circuitry of block 8 of figure 1.

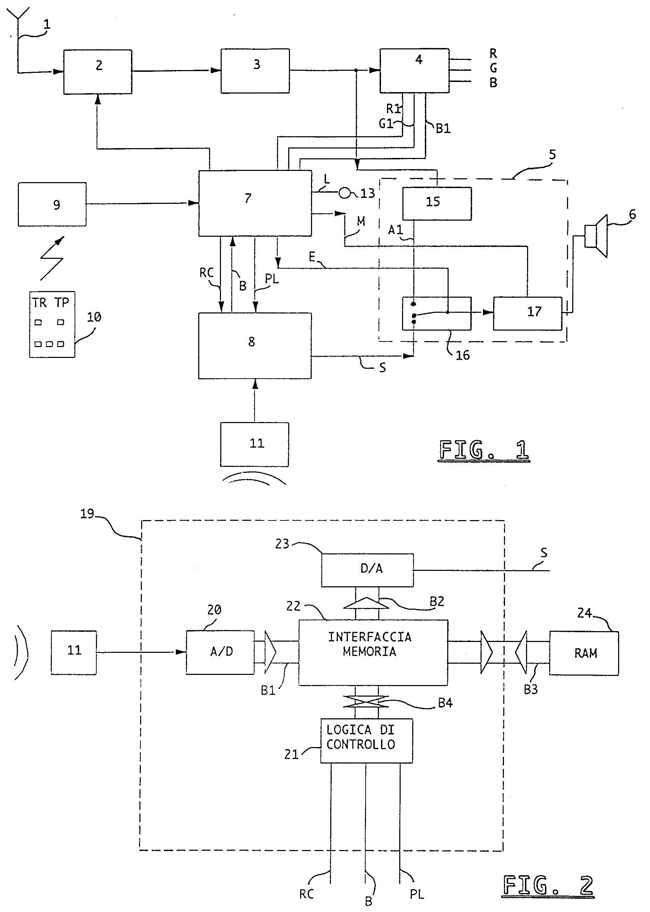

Figure 1 represents the block diagram of a part of the circuit of a television signals receiver according to the invention.

Reference number 1 indicates the receiving antenna; reference number 2 indicates the tuner of the television signals intercepted by the antenna 1, which also carries out, as is usual, the frequency conversion of the same to the value of the intermediate frequency; reference number 3 indicates the amplifier of the intermediate frequency signal coming from the tuner 2; the video signal detector is also comprised in block 3. Reference number 4 indicates the treating and decoding circuit of the luminance and chrominance signals contained in the composite video signal exiting block 3; as indicated in the figure, from block 4 exit three coloured signals, red (R), green (G) and blue (B); said signals then follow towards the relative amplifiers (not represented in the figure) and towards the CRT (not represented in the figure).

Reference number 15 indicates the amplifier and demodulator of the audio signal, also contained in the signal exiting block 3; the low frequency audio signal indicated with the symbol A1 exits block 15.

Reference number 10 indicates the remote control unit, which comprises, as is usual, a control keyboard and an infrared rays transmitter for transmitting the codes relative to the various keys to the main apparatus; reference number 9 indicates the command signals receiver, comprising an infra-red rays receiver and a decoding circuit of the signals received.

All of the circuits mentioned up to now are of the known type and therefore do not require a detailed description.

Reference number 7 indicates the central control unit (comprising a microcomputer) that, based on the signals received from the receiver 9, controls the normal functions of the television, such as for instance the tuning, the adjustment of the analogic parameters (volume, brightness, colour), and so on.

In the television of figure 1 the central unit 7 also controls the specific functions according to the invention; in fact it is connected to block 8 by way of three lines indicated with RC, PL and B, the function of which shall be explained later.

Block 8 is connected to a microphone indicated with reference number 11. Reference number 13 indicates a LED diode positioned on the command panel of the television which is piloted by the control unit 7 by way of line L.

Reference number 16 indicates an electronic switch, controlled by the signal E generated by block 7, which receives at an input the audio signal S containing the message obtained by way of the microphone 11 and at the other input the audio signal normally contained in the television signal A1; the switch 16 supplies the successive block 17 one of the two mentioned signals depending on whether the switching signal E is either in the HIGH or LOW state. Block 17 represents the final audio amplifier of the receiver that pilots the loudspeaker 6.

In figure 2 the circuitry of block 8 of figure 1 is represented in detail.

Reference number 20 indicates an analog to digital converter of 10 bit and sampled to 64kHz, that transforms the analogic signal coming from the microphone 11 in digital data to be sent to the memory RAM indicated with reference number 24; the memory 24 can be for instance of 1 Mbit; in such case the recorded message can have the duration of 8 seconds.

The bit of the sampled values are not placed in the memory, but the output of a comparator which compares the analogic input and the output of the D/A converter, according to the known system called CVDS; any other system of sampling and memorisation could however be used.

Reference number 22 indicates an interface block which manages the operations of reading and writing in the memory according to the indications of block 21, which is connected to the control unit 7 by way of the lines RC, PL and B.

Reference number 23 indicates a digital to analog converter also of 10 bit which transforms the data coming from the memory 24 in an analog signal S that is sent to block 16.

With the symbols B1, B2, B3, B4 the connection lines between the interface 22 and the other blocks described (20, 23, 24, 21) are indicated.

The functions realised by blocks 20, 21, 22, 23 can be realised in a single integrated circuit indicated in figure 2 with a dotted line and tagged with the reference number 19, for example the integrated circuit TMS 3477 by Texas Instruments.

The functioning of the described circuit takes place as follows.
A) Memorising the message.
   If the key TR is pressed on the remote control; the command arrives through block 9 to the control unit 7, which proceeds to the following operations:
   - zeroes the audio volume by way of the line M;
   - sends on the line RC a command to block 21 which allows for transferring the data from block 20 to the memory 24 under the control of block 22;
   - lights the LED 13 by way of the line L which warns the user that the recording has started; the same indication could also take place by way of an appropriate written message on the screen of the television, sent from the control unit 7 through the lines R1, B1 and G1;
   - on termination of the recording time allowed, which depends on the capacity of the available memory and on the frequency sampling of the converter, the management unit 21 informs the central unit 7 with the line B that all the memory locations are engaged; the audio returns back to normal and the LED 13 flashes so as to indicate the end of the recording.
B) Listening to the message.
   By pressing the key TP on the remote control; the central unit 7 by way of line PL enables the data transfer from the RAM to the digital to analog converter 23 and switches block 16 by way of line E; the audio memorised S is sent to the loudspeaker; when all the data has been transferred, block 16 is switched once again and the television returns to its normal functioning. The LED 13 continues to flash until the message memorised is not cancelled; the cancelling can take place in various ways:
   - switching the television off at the mains;
   - pressing a determined combinations of keys simultaneously on the remote control or a determined succession; i.e. for avoiding the undesired cancellation.

Naturally in the example a television has always been referred to; but the same function could be implemented in a video tape recorder (by way of the loudspeaker of the television connected to the video tape recorder); or in a radio-receiver or a hi-fi appliance.

From the given description the characteristics of the apparatus subject of the present invention result in being clear, as do its advantages.

In particular the apparatus according to the invention allows the user to record in a very simple and immediate manner a message to be recalled later in an equally easy manner.

It is clear that numerous variants are possible to the apparatus subject of the present invention, without for this departing from the novelty principles inherent in the inventive idea, as it is clear that in the practical embodiment of the invention the materials and forms of the details illustrated can be different, and the same can be substituted with technically equivalent elements.

## Claims

1. Electronic domestic apparatus, in particular a television signals receiver, which can be connected to a source of audio signals (A1) and to a reproducer of acoustic signals (6), and equipped with a control keyboard (10), characterised in that it provides means (11, 8, 7) able to receive, record in an electronic memory (24) and reproduce a sonorous message (S) and a circuitry switching block (16) for selectively connecting such reproducer of acoustic signals (6) to the two different sources of audio signals (A1, S).

2. Electronic apparatus, according to claim 1, characterised in that it provides analog-digital conversion means (20) and digital-analog conversion means (23).

3. Electronic apparatus, according to claim 2, characterised in that said analog-digital conversion means (20) and said digital-analog conversion means (23) have a resolution of 10 bit and a sampling frequency of 64 kHz.

4. Electronic apparatus, according to claim 2, characterised in that said digital memory means (24) have a capacity of approximately 1 Mbit.

5. Electronic apparatus, according to claim 2, characterised in that said analog-digital conversion means (20), are coupled to a microphone (11) for receiving the voice of the user.

6. Electronic apparatus, according to one or more of the previous claims, characterised in that said control keyboard (10) comprises an appropriate key (TR) for enabling the recording of said sonorous message.

7. Electronic apparatus, according to one or more of the previous claims, characterised in that said control keyboard (10) comprises an appropriate key (TP) for enabling the reproduction of said sonorous message.

8. Electronic apparatus, according to one or more of the previous claims, characterised in that it provides a microcomputer type electronic central control unit (7) that provides for controlling the functions of the apparatus.

9. Electronic apparatus, according to claim 8, characterised in that it provides an interface block (22) which manages the reading and writing operations in the memory according to the indications coming from the control unit (7).

10. Electronic apparatus, according to one or more of the previous claims, characterised in that it provides the display of information indicating that the recording has started.

11. Electronic apparatus, according to claim 10, characterised in that such display takes place by way of an appropriate written text on the television screen.

12. Electronic apparatus, according to claim 10, characterised in that such display takes place by way of the switching on of a LED diode (13).

13. Electronic apparatus, according to one or more of the previous claims, characterised in that it is a radio-receiver.

14. Electronic apparatus, according to one or more of the previous claims, characterised in that it is a video tape recorder.

15. Electronic apparatus, according to one or more of the previous claims, characterised in that it is a hi-fi appliance.

16. Electronic apparatus, according to one or more of the previous claims, characterised in that it is a television.

17. Method for reproducing a sonorous message (S) by way of an electronic domestic apparatus, equipped with a reproducer of acoustic signals (6), in particular a television signals receiver, characterised in that it provides the following steps:
- the message is received from a source of audio signals (A1);
- the message is recorded in an electronic memory (24);
- the message is sent to said reproducer of acoustic signals (6) by way of a circuitry switching block (16) arranged for selectively connecting such reproducer to the two different sources of audio signals (A1, S).
